# NEUE EUROPÄISCHE PATENTSCHRIFT

(11) **EP 2 697 881 B2**
(45) Veröffentlichungstag und Bekanntmachung des Hinweises auf die Entscheidung über den Einspruch: **26.06.2019**
(45) Hinweis auf die Patenterteilung: 30.11.2016
(21) Anmeldenummer: 12717635.2
(22) Anmeldetag: 11.04.2012
(51) Int. Cl.: H02H 9/02, H01H 9/30

(54) **ZWEISTUFIGE ABSCHALTVORRICHTUNG**
TWO-STAGE SHUT-OFF DEVICE
DISPOSITIF DE COUPURE À DEUX ÉTAGES

(30) Priorität: 12.04.2011 DE 102011001977
(43) Veröffentlichungstag der Anmeldung: 19.02.2014
(73) Patentinhaber: Phoenix Contact GmbH & Co. KG, 32825 Blomberg (DE)
(72) Erfinder: FINIS, Gernot, 34119 Kassel (DE); BEHNKE, Sven, 33189 Schlangen (DE); CERNY, Joachim, A-6842 Koblach (AT); METZGER, Andreas, 32756 Detmold (DE); DEPPING, Christian, 32657 Lemgo (DE); MEYER, Thomas, 31868 Ottenstein (DE)
(74) Vertreter: Gesthuysen Patent- und Rechtsanwälte
(86) Internationale Anmeldenummer: PCT/EP2012/056507
(87) Internationale Veröffentlichungsnummer: WO 2012/140033

(56) Entgegenhaltungen:
- EP-A1- 0 173 017
- WO-A1-02/43217
- WO-A1-99/36927
- WO-A2-97/10636
- WO-A2-99/10902
- DE-A1-102008 013 448
- US-A- 5 379 176
- US-A- 5 629 658

## Beschreibung

Abschaltvorrichtungen finden sich in vielen Anwendungsbereichen.

Häufig weisen diese Abschaltvorrichtungen als Schaltelement einen Varistor auf.

Altern Varistoren so tritt ein schleichendes, manchmal auch ein schlagartiges, Durchlegieren auf.

Dieses Durchlegieren führt in aller Regel zu einer Erwärmung des Varistors und kann auch zu einem Lichtbogen zwischen den Anschlusselektroden des Varistors führen.

In diesem Fall ist die Abschaltung nicht mehr gewährleistet und die Abschaltvorrichtung besitzt kein Abschaltvermögen mehr.

Bekannte Lösungen aus dem Bereich der Photovoltaik versuchen diesen Mangel dadurch zu umgehen, dass auf einen parallelen Pfad - am Varistor vorbei - umgeschaltet wird, wobei der parallele Pfad eine gleichspannungslöschfähige Sicherung aufweist.

Solche besonders konstruierten gleichspannungslöschfähige Sicherungen sind zum einen aufwändig, zum anderen teuer.

Zudem ist auch das Umschalten auf den parallelen Pfad an sich technisch schwierig, da auch bei diesem Schalten Lichtbögen auftreten können, was bei Gleichspannungsanwendungen im Allgemeinen immer ein Problem darstellt.

Die WO 97/10636 A2 betrifft den Überstromschutz für elektrische Schaltungen. Dazu werden mechanische Schalter verwendet, um den Fluss des Stroms in elektrischen Schaltungen zu steuern. Derartige Einrichtungen umfassen einfache manuelle Schalter, Schaltungsunterbrecher, Massefehler-Unterbrechungen, Relais und Bimetall-Einrichtungen. Ein PTC Element wird in Reihe zu einem mechanischen Schalter oder einem anderen Schaltungsunterbrechungselement geschaltet, so dass wenn ein Überstrom auftritt, dann steigt das PTC Element im Widerstand an, und in Folge dessen geht ein erhöhter Strom durch ein Umgehungselement fließt. Der erhöhte Strom durch das Umgehungselement bewirkt, dass das Schaltungsunterbrechungselement in seinen Fehlerzustand umgewandelt wird.

Gemäß der WO 02/43217 A1 werden mehrere Varistoren elektrisch parallel geschaltet, um einen abzuleitenden Strom zu verteilen. Auf Grund von Fertigungstoleranzen weichen die UI-Kennlinien der einzelnen Varistoren voneinander ab, so dass sich der abzuleitende Strom auf die einzelnen Varistoren ungleichmäßig aufteilt. Dadurch werden die einzelnen Varistoren unterschiedlich stark belastet bis hin zu einer Überlastung einzelner Varistoren. Um die Verteilung des Ableitstromes auf die einzelnen Varistoren zu steuern, ist zu einem der Varistoren ein Kaltleiterelement elektrisch in Serie geschaltet.

Der Erfindung liegt daher die Aufgabe zu Grunde, eine Abschaltvorrichtung bereitzustellen, die einen oder mehrere aus dem Stand der Technik bekannten Nachteile behebt.

Die Lösung der Aufgabe erfolgt erfindungsgemäß durch die Merkmale der unabhängigen Ansprüche.

Vorteilhafte Ausgestaltungen der Erfindung sind in den Unteransprüchen angegeben.

Nachfolgend wird die Erfindung unter Bezugnahme auf die anliegende Zeichnung anhand bevorzugter Ausführungsformen näher erläutert.

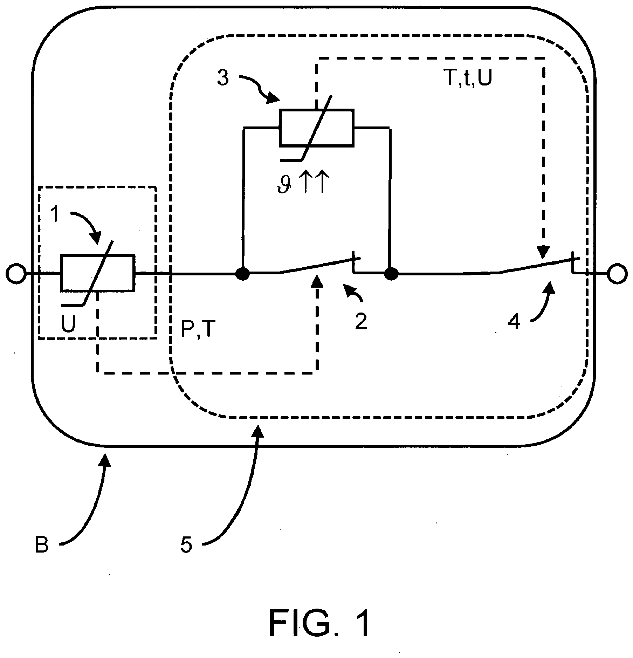

Es zeigen
- Fig. 1: eine schematische Darstellung einer ersten exemplarischen Ausführungsform der Erfindung.

Die Figur 1 zeigt eine Zweistufige Abschaltvorrichtung.

Hierzu weist die zweistufige Abschaltvorrichtung 5 eine erste Schalteinrichtung 2 auf, welche geeignet ist im Störfall geschaltet zu werden.

Die erste Schalteinrichtung 2 ist als ein Öffner ausgeführt, welcher in Serie zum Varistor 1 angeordnet ist.

Der Öffner 2 kann herkömmlicher Natur sein und muss - auch für Gleichspanungsanwendungen - nicht besonders ausgeführt sein, d.h. es müssen keine weitergehenden Anforderungen an eine Gleichspannungslöschfähigkeit gestellt werden.

Weiterhin weist die zweistufige Abschaltvorrichtung 5 einen Kaltleiter 3 auf, der parallel zur ersten Schalteinrichtung 2 angeordnet ist.

Der Kaltleiter 3 ist dabei so dimensioniert, dass der Kaltleiter 3 im kalten Zustand einen Widerstand aufweist, der (unwesentlich) kleiner als der vergleichbare Widerstand ist, der sich an der ersten Schalteinrichtung 2 im Falle eines Schaltlichtbogens ausbilden würde.

Weiterhin weist die zweistufige Abschaltvorrichtung 5 eine zweite Schalteinrichtung 4 auf.

Die zweite Schalteinrichtung 4 kann beispielsweise als ein Öffner ausgeführt sein, welcher wiederum in Serie zum Varistor 1 angeordnet ist.

Die zweite Schalteinrichtung 4 wird durch den Kaltleiter 3 gesteuert.

Der Öffner 4 kann herkömmlicher Natur sein und muss - auch für Gleichspanungsanwendungen - nicht besonders ausgeführt sein, d.h. es müssen keine weitergehenden Anforderungen an eine Gleichspannungslöschfähigkeit gestellt werden.

Durch diese Anordnung kann erreicht werden, dass bei einer Erwärmung T des Varistors 1 oder bei einem Druckanstieg P im Gehäuse des Varistors 1, wie er z.B. bei einem Lichtbogen auftritt, die erste Schalteinrichtung 2 betätigt wird. Hierzu kann die erste Schalteinrichtung 2 über eine entsprechende Wirkverbindung verfügen.

Beispielsweise kann die erste Schalteinrichtung 2 einen ersten druckempfindlichen Schalter aufweisen, der über eine hohlraumartige Verbindung mit dem Gehäuse des Varistors 1 koppelbar ist.

Beispielsweise kann die erste Schalteinrichtung 2 einen ersten thermischen Schalter aufweisen, der in thermischen Kontakt mit dem Varistor 1 gebracht werden kann.

Natürliche können unterschiedliche Schalterarten auch als Serienschaltung in einer ersten Schalteinrichtung 2 vereint sein, so dass unterschiedliche Möglichkeiten bestehen das Durchlegieren festzustellen und entsprechender Weise ein Abschalten herbeizuführen,

Beim Auftrennen (Öffnen) der ersten Schalteinrichtung 2 kann ein Lichtbogen an der ersten Schalteinrichtung 2 auftreten.

Jedoch befindet sich parallel zur ersten Schalteinrichtung 2 ein Kaltleiter 3.

Dieser ist bei Normbetrieb nicht von Strom durchflossen, da der Strom durch die erste Schalteinrichtung 2 kurzschlussartig am Kaltleiter 3 vorbei fließt.

Der Kaltleiter 3 ist daher bei Beginn des Schaltereignisses niederohmig.

Da der Kaltleiter 3 so dimensioniert ist, dass der Kaltleiter 3 bei Belastung, z.B. mit dem Nennstrom des Varistors 1, im kalten Zustand einen Widerstand aufweist, der (unwesentlich) kleiner als der vergleichbare Widerstand ist, der sich an der ersten Schalteinrichtung 2 im Falle eines Schaltlichtbogens ausbilden würde, kommutiert Strom nun vom Lichtbogen über die erste Schalteinrichtung 2 auf den Kaltleiter 3 über und der Lichtbogen an der ersten Schalteinrichtung 2 verlöscht.

Durch den nun erfolgenden Stromfluss durch den Kaltleiter 3 erwärmt sich der Kaltleiter 3 und führt zu einem Anstieg des Widerstandes des Kaltleiters 3.

Die Widerstandszunahme am Kaltleiter 3 führt dazu, dass der Spannungsabfall über dem Kaltleiter 3 zunimmt.

Da der Spannungsabfall über dem Kaltleiter 3 zunimmt, nimmt die Spannung über den Varistor 1 in der Serienschaltung aus Kaltleiter 3 und Varistor 1 ab.

Dabei wird die Brennspannung bzw. der Haltestrom zur Aufrechterhaltung eines Lichtbogens am Varistor 1 unterschritten und ein am Varistor 1 noch vorhandener Lichtbogen wird gelöscht.

Da der Strom durch die zunehmende Erwärmung des Kaltleiters 3 sich weiter vermindert, kann nun eine zweite Schalteinrichtung 4 den Stromfluss unterbinden, ohne dass an diese zweite Schalteinrichtungen besondere Anforderungen an eine Gleichspannungslöschfähigkeit gestellt werden.

Hieraus kann z.B. ein weiteres Auslegungskriterium für den Kaltleiter 2 abgeleitet werden.

Um eine Unterdrückung eines Lichtbogens in der zweiten Schalteinrichtung zu erreichen, muss der Strom, welcher im erwärmten Zustand durch den Kaltleiter 3 noch fließt, so abgesenkt worden sein, dass das Schalten mittels der zweiten Schalteinrichtung sicher möglich ist. D.h. der Widerstand des Kaltleiter 3 muss zum Zeitpunkt des Schaltens der zweiten Schalteinrichtung 4 so groß sein, dass selbst bei Nennstrom durch den Varistor 1, die Schalteinrichtung geöffnet werden kann.

Diese zweite Schalteinrichtung 4 kann zum einen zeitversetzt t nach dem Schalten der ersten Schalteinrichtung 2 geschaltet werden, oder aber durch Erreichen einer Schalttemperatur T vom Kaltleiter 3 thermisch gesteuert sein oder aber die Schaltung kann durch den am Kaltleiter 3 entstehenden Spannungsabfall U bewirkt werden.

Wird z.B. eine thermische Steuerung der zweiten Schalteinrichtung 4 vorgesehen, so kann die zweite Schalteinrichtung 4 als eine elektrische Lötverbindung ausgestaltet sein, welche unter thermischer Einwirkung den elektrischen Stromfluss auftrennt. Hierzu wird die Lötverbindung in thermischen Kontakt mit dem Kaltleiter 4 angeordnet.

Sobald die zweite Schalteinrichtung 4 betätigt ist, ist die vollständige Trennung erreicht.

Es versteht sich von selbst, dass in gleicher Weise wie zuvor für die erste Schalteinrichtung 2 beschrieben auch die zweite Schalteinrichtung 4 als eine Serienschaltung unterschiedlicher Schalter aufgebaut sein kann.

Durch die vorgestellte Erfindung ist daher auf einfache Art und Weise möglich eine kostengünstige Abschaltvorrichtung zur Verfügung zu stellen, welche ein Abschalten zuverlässig ermöglicht.

Diese Abschaltvorrichtung 5 weist sich unter anderem dadurch aus, dass im normalen Betriebsfall, der Widerstand durch die eingesetzten Schalteinrichtungen 2 und 4 gering ist und herkömmliche Bauteile verwendet werden können.

Der Störfall eines Varistors 1 kann auf Unterschiedliche Weise erkannt werden.

So ist es z.B. möglich ein Druckanstieg und / oder eine Erwärmung im Störfall dazu zu nutzen, dass die erste Schalteinrichtung 2 schaltet.

Jedoch können auch andere Wirkprinzipien vorgesehen sein, um eine Abschaltung zu veranlassen.

Soweit vorstehend auf einen Kaltleiter 3 Bezug genommen wurde, ist jede Art von Kaltleiter umfasst.

D.h. es können sowohl Kaltleiter, wie Dickfilm PTCs, welche eine im Wesentlichen lineare Abhängigkeit des Widerstandes von der Temperatur aufweisen, eingesetzt werden, oder aber es können Kaltleiter, wie keramische oder polymer basierte PTCs, welche eine im Wesentlichen nichtlineare Abhängigkeit des Widerstandes von der Temperatur aufweisen, eingesetzt werden.

Die zweistufige Abschalteinrichtung 5 kann als eine Baueinheit ausgeführt sein, welche als Nachrüstteil für bestehende Varistoren ausgeformt ist.

Hierzu kann die Baugruppe 5 entsprechende Ein- und Ausgänge aufweisen, um mit einem Varistor und der zu schützenden Einrichtung verbunden zu werden.

Weiterhin kann die zweistufige Abschalteinrichtung 5 und der Varistor 1 auch als Baugruppe B ausgeführt sein.

Hierdurch kann bei geeigneter Ausführung die Baugruppe B als Ersatz für einen Varistor eingesetzt werden.

Darüber hinaus kann die zweistufige Abschalteinrichtung 5 auch mit weiteren Einrichtungen versehen sein, um den Zustand der zweistufigen Abschalteinrichtung 5 lokal akustisch und/oder optisch bzw. mittels Fernsignalisierungseinrichtungen zu melden.

Ohne hierauf näher einzugehen kann das Vorbezeichnete Wirkprinzip auch auf Wechselspannungen angewendet werden.

In diesem Fall werden zwei antiparallel geschaltete Varistoren 1 eingesetzt.

**Bezugszeichenliste**

| | |
|---|---|
| Varistor | 1 |
| erste Schalteinrichtung | 2 |
| Kaltleiter | 3 |
| zweite Schalteinrichtung | 4 |
| Abschaltvorrichtung | 5 |
| Baugruppe | B |

## Patentansprüche

1. Zweistufige Abschaltvorrichtung aufweisend einen Varistor (1)
• eine erste Schalteinrichtung (2), welche geeignet ist im Störfall geschaltet zu werden, wobei die erste Schalteinrichtung (2) ein Öffner ist, welcher in Serie zum Varistor (1) angeordnet ist, wobei ein Druckanstieg im Gehäuse des Varistors (1) und/oder eine Erwärmung des Varistors (1) im Störfall die erste Schalteinrichtung (2) schaltet,
• einen Kaltleiter (3), der parallel zur ersten Schalteinrichtung (2) angeordnet ist, wobei der Kaltleiter im kalten Zustand einen Widerstand aufweist, der kleiner als der vergleichbare Widerstand ist, der sich an der ersten Schalteinrichtung (2) im Falle eines Schaltlichtbogens ausbilden würde,
• eine zweite Schalteinrichtung (4), wobei die zweite Schalteinrichtung (4) ein Öffner ist, welcher in Serie zum Varistor (1) und zur Parallelschaltung aus erster Schalteinrichtung (2) und Kaltleiter (3) angeordnet ist, wobei die zweite Schalteinrichtung durch den Kaltleiter (3) gesteuert wird.

2. Zweistufige Abschaltvorrichtung nach Anspruch 1, **dadurch gekennzeichnet, dass** der Kaltleiter (3) eine im Wesentlichen lineare Abhängigkeit des Widerstandes von der Temperatur aufweist.

3. Zweistufige Abschaltvorrichtung nach Anspruch 1, **dadurch gekennzeichnet, dass** der Kaltleiter (3) eine im Wesentlichen nichtlineare Abhängigkeit des Widerstandes von der Temperatur aufweist.

4. Zweistufige Abschaltvorrichtung nach einem der vorhergehenden Ansprüche, **dadurch gekennzeichnet, dass** ein Spannungsanstieg am Kaltleiter (3) und / oder eine Erwärmung des Kaltleiters (3) die zweite Schalteinrichtung (4) schaltet.

5. Zweistufige Abschaltvorrichtung nach Anspruch 4, **dadurch gekennzeichnet, dass** die zweite Schalteinrichtung (4) eine elektrische Lötverbindung ist, welche unter thermischer Einwirkung den elektrischen Stromfluss auftrennt.

## Claims

1. A two-stage shut-off device comprising a varistor (1)
• a first switching unit (2), which is suitable to be switched in the event of a fault, wherein the first switching unit (2) is a normally closed contact which is arranged in series in relation to the varistor (1), wherein a rise in pressure in the housing of the varistor (1) and/or a heating of the varistor (1) in the event of a fault switches the first switching unit (2),
• a PTC thermistor (3), which is arranged parallel to the first switching unit (2), wherein the PTC resistor (3) in the cold state has a resistance that is lower than the comparable resistance that would form at the first switching unit (2) in the event of a switch arc,
• a second switching unit (4), wherein the second switching unit (4) is a normally closed contact which is arranged in series in relation to the varistor (1) and in relation to the parallel connection of the first switching unit (2) and the PTC thermistor (3), wherein the second switching unit is controlled by the PTC thermistor (3),

2. The two-stage shut-off device according to claim 1,**characterised in that** the resistance of the PTC thermistor (3) has a substantially linear dependency on temperature.

3. The two-stage shut-off device according to claim 1,**characterised in that** the resistance of the PTC thermistor (3) has a substantially non-linear dependency on temperature.

4. The two-stage shut-off device according to any one of the preceding claims,**characterised in that** a voltage rise at the PTC thermistor (3) and/or a heating of the PTC thermistor (3) switches the second switching unit (4).

5. The two-stage shut-off device according to claim 4,**characterised in that** the second switching unit (4) is an electrical soldered connection, which disconnects the electrical current flow under thermal influence.

## Revendications

1. Dispositif de coupure à deux étages présentant un varistor (1)
• un premier dispositif de commutation (2), lequel est approprié pour être mis en marche en cas de défaillance, où le premier dispositif de commutation (2) est un contact à ouverture, lequel est dispose en série avec le varistor (1), où une augmentation de pression dans le boîtier du varistor (1) et/ou un échauffement du varistor (1) met le premier dispositif de commutation (2) en marche en cas de défaillance,
• une thermistance CTP (3) qui est disposée parallèlement par rapport au premier dispositif de commutation(2), où la thermistance CTP (3) présente une résistance à l'état froid qui est inférieure à la résistance comparable qui se produirait sur le premier dispositif de commutation (2) dans le cas d'un arc de commutation,
• un deuxième dispositif de commutation (4), où le deuxième dispositif de commutation (4) est un contact à ouverture, lequel est disposé en série par rapport au varistor (1) et par rapport au montage en parallèle du premier dispositif de commutation (2) et de la thermistance CTP (3), où le deuxième dispositif de commutation est commandé par la thermistance CTP (3).

2. Dispositif de coupure à deux étages selon la revendication 1, **caractérisé en ce que** la thermistance CTP (3) présente une relation essentiellement linéaire entre la résistance et la température.

3. Dispositif de coupure à deux étages selon la revendication 1, **caractérisé en ce que** la thermistance CTP (3) présente une relation essentiellement non linéaire entre la résistance et la température.

4. Dispositif de coupure à deux étages selon l'une des revendications précédentes, **caractérisé en ce qu'**une augmentation de tension sur la thermistance CTP (3) et/ou un échauffement de la thermistance CTP (3) met le deuxième dispositif de commutation (4) en marche.

5. Dispositif de coupure à deux étages selon la revendication 4, **caractérisé en ce que** le deuxième dispositif de commutation (4) est une liaison par brasage électrique, laquelle divise le flux de courant électrique sous un effet thermique.
